# EUROPEAN PATENT APPLICATION

(11) **EP 3 865 713 A1**
(43) Date of publication of application: **18.08.2021**
(21) Application number: 20210419.6
(22) Date of filing: 27.11.2020
(51) Int. Cl.: F15B 1/16, F15B 1/22

(54) **ACCUMULATOR**

(30) Priority: 12.02.2020 JP 2020021926
(71) Applicant: Nippon Accumulator Co., Ltd., Shizuoka-shi, Shizuoka 424-0038 (JP)
(72) Inventor: SUGIMURA, Nobuyuki, Shizuoka-shi,, Shizuoka 424-0876 (JP); SUGIMURA, Tomu, Shizuoka-shi,, Shizuoka 424-0876 (JP); SAKURAGI, Shun-ichi, Ninomiya-machi, Naka-gun,, Kanagawa 259-0133 (JP); KOMATSU, Toshimitsu, Shizuoka-shi,, Kanagawa 424-0855 (JP)
(74) Representative: Isarpatent

(57) **Abstract**

An accumulator includes a body and a bladder. The bladder divides a space inside the body into a hydraulic pressure chamber and a gas pressure chamber. The body includes a hydraulic side connection portion having a hole for supply and discharge, a closing means for opening and closing the hole for supply and discharge, and an elastic member for urging the closing means in a closing direction. The elastic member is disposed in the hole for supply and discharge. The accumulator further includes a cover provided to cover at least a portion of the elastic member. For example, the cover is provided to cover a portion of the elastic member on the side toward the hydraulic pressure chamber or a portion of the elastic member on the side opposite the hydraulic pressure chamber side.

## Description

### Technical Field

The present invention relates to an accumulator, and more particularly to a bladder-type accumulator.

### Background Art

In a conventional accumulator, an internal space is divided into two chambers by a partition wall. One of the two chambers serves as a gas chamber, and the other chamber serves as a hydraulic pressure chamber. In some accumulators, a bladder provided to be expandable and contractable is used as the partition wall (hereinafter, such an accumulator is referred to as a "bladder-type accumulator "). Such a bladder-type accumulator is connected to, for example, a hydraulic circuit (e.g., an oil-hydraulic circuit or the like) and is used for the purpose of, for example, pressure accumulation or suppression of pulsation of the hydraulic circuit.

The bladder-type accumulator is configured such that the space inside the bladder serves as a gas pressure chamber, and the hydraulic pressure chamber is located on the outer side of the bladder. The hydraulic pressure chamber is provided such that a working fluid (e.g., oil) can flow into the hydraulic pressure chamber and flow out of the hydraulic pressure chamber. The bladder; i.e., the gas in the gas pressure chamber, is compressed and expands in accordance with the pressure of the working fluid (see, for example, Patent Document 1).

In the bladder-type accumulator, a poppet valve serving as a supply/discharge valve is provided in a hydraulic side connection portion which is connected to the hydraulic circuit. The poppet valve is provided so as to limit expansion of the bladder. The poppet valve is urged in a closing direction by an elastic member such as a compression coil spring or the like. When the working fluid pressure on the hydraulic circuit side drops to a certain level or lower, the poppet valve closes so as to prevent further expansion of the bladder.

Patent Document 1: Publication of Japanese translation of PCT international application No. 2018-519190

However, the bladder-type accumulator has the following problem. The working fluid pressure within the hydraulic side connection portion drops due to pressure loss produced when the working fluid is discharged from the accumulator to the hydraulic circuit, so that the pressure balance around the poppet valve is lost. In such a case, there occurs a so-called confinement phenomenon in which the poppet valve closes even when the working fluid pressure of the hydraulic circuit does not lower.

### Summary of the Invention

In view of the foregoing, an object of the present invention is to provide an accumulator which can prevent occurrence of the confinement phenomenon.

The present invention is an accumulator including a body and a bladder. The bladder divides a space inside the body into a hydraulic pressure chamber and a gas pressure chamber. The body includes a hydraulic side connection portion having a hole for supply and discharge, a closing means for opening and closing the hole for supply and discharge, and an elastic member for urging the closing means in a closing direction. The elastic member is disposed in the hole for supply and discharge. In the accumulator, a cover is provided to cover at least a portion of the elastic member.

In the present invention, the cover may be provided to cover at least a portion of the elastic member on a side toward the hydraulic pressure chamber or at least a portion of the elastic member on a side opposite the hydraulic pressure chamber side. In the present invention, the cover may be composed of at least two cover elements. One of the cover elements is provided to cover at least a portion of the elastic member on the side toward the hydraulic pressure chamber, and the other cover element is provided to cover at least a portion of the elastic member on the side opposite the hydraulic pressure chamber side.

In the present invention, the at least two cover elements may be disposed such that their distal end portions overlap each other and they cover approximately the entirety of the elastic member, and at least one discharge passage may be formed so as to discharge a working fluid within the cover. In the present invention, the discharge passage may be provided between the distal end portions of the at least two cover elements. In the present invention, the discharge passage may be a hole provided in at least one of the at least two cover elements.

In the present invention, the hole for supply and discharge may include an anterior chamber communicatable with the hydraulic pressure chamber, a posterior chamber provided on a side opposite the anterior chamber, an intermediate wall serving as a partition between the anterior chamber and the posterior chamber, and a communication hole formed in the intermediate wall and establishing communication between the anterior chamber and the posterior chamber. The posterior chamber has an open end on a side opposite the intermediate wall, and a pressure loss reducer is provided in a central region of the posterior chamber. The pressure loss reducer is provided to extend from the intermediate wall toward the open end when the hole for supply and discharge is opened. In the present invention, the closing means may be a poppet valve, and the elastic member may be a compression coil spring.

According to the present invention, the cover which covers the elastic member urging the closing means is provided, whereby the pressure loss produced when the working fluid is discharged from the accumulator to the hydraulic circuit can be reduced. Therefore, occurrence of the confinement phenomenon can be prevented.

### Brief Description of the Drawings

FIG. 1 is a partially sectioned longitudinal cross-sectional view of a first embodiment of the present invention.
FIG. 2 is an enlarged view of a main portion of FIG. 1.
FIG. 3A is a pressure contour diagram obtained as a result of CFD analysis of an example.
FIG. 3B is a velocity contour diagram obtained as a result of CFD analysis of the example.
FIG. 4A is a pressure contour diagram obtained as a result of CFD analysis of a comparative example.
FIG. 4B is a velocity contour diagram obtained as a result of CFD analysis of the comparative example.
FIG. 5 is a view corresponding to FIG. 2 and showing a second embodiment of the present invention.
FIG. 6 is a view corresponding to FIG. 2 and showing a third embodiment of the present invention.
FIG. 7A is a pressure contour diagram obtained as a result of CFD analysis of a reference example.
FIG. 7B is a velocity contour diagram obtained as a result of CFD analysis of the reference example.
FIG. 8 is a view corresponding to FIG. 2 and showing a modification of the first embodiment of the present invention.
FIG. 9 is a view corresponding to FIG. 2 and showing a modification of the second embodiment of the present invention.
FIG. 10A is a view corresponding to FIG. 2 and showing a modification of the third embodiment of the present invention.
FIG. 10B is a view corresponding to FIG. 2 and showing another modification of the third embodiment of the present invention.

### Modes for Carrying out the Invention

Through analysis of pressure loss which causes the confinement phenomenon, the inventors of the present invention found that an irregular vortex is generated near an uncovered elastic member disposed in a working fluid discharge passage in a hydraulic side connection portion, whereby the energy of a working fluid dissipates, which is one of major causes of pressure loss. The present invention is based on that finding.

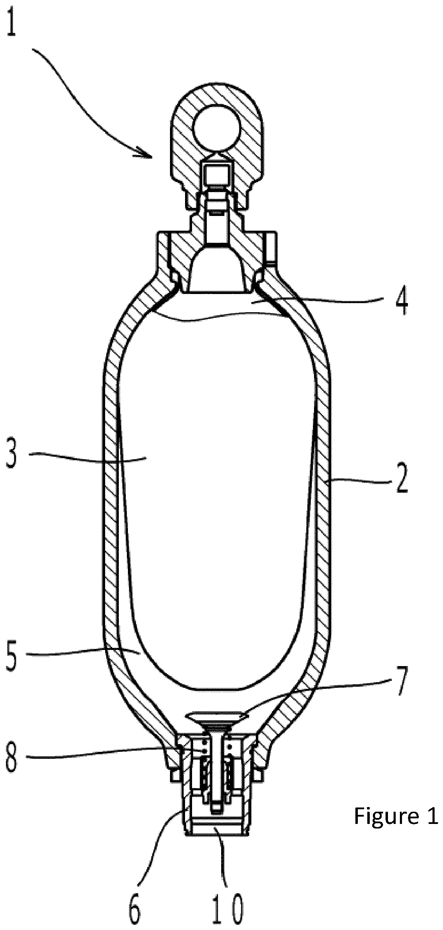

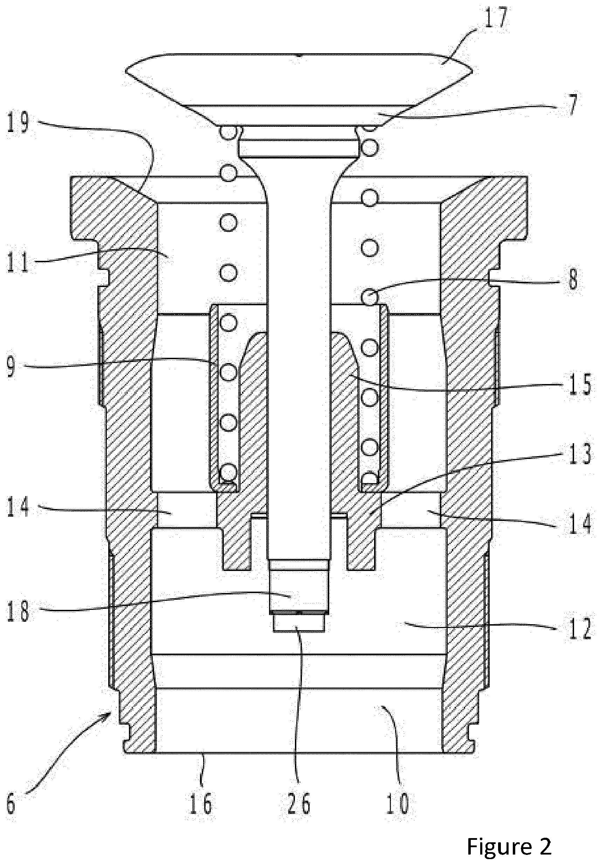

A first embodiment of the present invention will be described with reference to FIGS. 1 and 2. An accumulator 1 includes a body 2 and a bladder 3. The bladder 3 has stretching properties and divides the interior of the body 2 such that a gas pressure chamber 4 is located inside the bladder 3, and a hydraulic pressure chamber 5 is located outside the bladder 3.

The body 2 has a hydraulic side connection portion 6 (hereinafter also referred to as the "connection portion 6"), a closing means 7, an elastic member 8, and a cover 9. The connection portion 6 is provided on one side of the body 2 where the hydraulic pressure chamber 5 is present. The connection portion 6 is provided to connect the accumulator 1 directly or indirectly to, for example, a hydraulic circuit (not shown) such as a water hydraulic circuit or an oil hydraulic circuit. The connection portion 6 has a hole for supply and discharge 10 (hereinafter also referred to as the "hole 10") through which the working fluid can be supplied to the hydraulic pressure chamber 5 and discharged from the hydraulic pressure chamber 5.

The hole 10 has an anterior chamber 11, a posterior chamber 12, an intermediate wall 13, and communication holes 14. The intermediate wall 13 divides the interior of the hole 10 into the anterior chamber 11 and the posterior chamber 12. In the present embodiment, the intermediate wall 13 has a support portion 15 for slidably supporting a shaft 18 of the closing means 7, which will be described later.

The anterior chamber 11 is provided in such a manner that the anterior chamber 11 can communicate with the hydraulic pressure chamber 5. The posterior chamber 12 is provided on the side opposite the anterior chamber 11. An end 16 of the posterior chamber 12 on the side opposite the intermediate wall 13 is open (hereinafter, the end 16 will be referred to as the "open end 16"). In the present embodiment, the open end 16 is provided in such a manner that the open end 16 can communicate with the hydraulic circuit. The communication holes 14 are provided in the intermediate wall 13 so as to establish communication between the anterior chamber 11 and the posterior chamber 12. The working fluid can flow through the communication holes 14.

The elastic member 8 is disposed in the hole 10 (in the anterior chamber 11 in the present embodiment), and urges the closing means 7 in a closing direction (downward in the present embodiment). The closing means 7 is provided so as to open and close the hole 10. Since the closing means 7 is urged in the closing direction by the elastic member 8, the closing means 7 closes the hole 10. When a working fluid pressure greater than the urging force of the elastic member 8 acts on the closing means 7, the closing means 7 opens the hole 10, thereby establishing communication between the hydraulic pressure chamber 5 and the hydraulic circuit through the hole 10.

In the present embodiment, the closing means 7 is a poppet valve which is provided on the anterior chamber 11 side of the hole 10 and which includes a valve body 17 having an approximately truncated conical shape, and a shaft 18 extending through the intermediate wall 13. By the urging force of the elastic member 8, the valve body 17 is brought into pressure contact with a valve seat 19 formed on the hole 10 side to have a shape corresponding to the shape of the valve body 17. As a result, the communication between the anterior chamber 11 of the hole 10 and the hydraulic pressure chamber 5 is shut off; i.e., the hole 10 is closed. The elastic member 8 is a compression coil spring disposed in the anterior chamber 11 of the hole 10.

The cover 9 is provided to cover at least a portion of the elastic member 8. In the present embodiment, the cover 9 is provided to cover a portion of the elastic member 8 on the side opposite the hydraulic pressure chamber 5, preferably, at least an approximately lower half of the elastic member 8. The cover 9 is attached to the intermediate wall 13 of the hole 10.

### Examples:

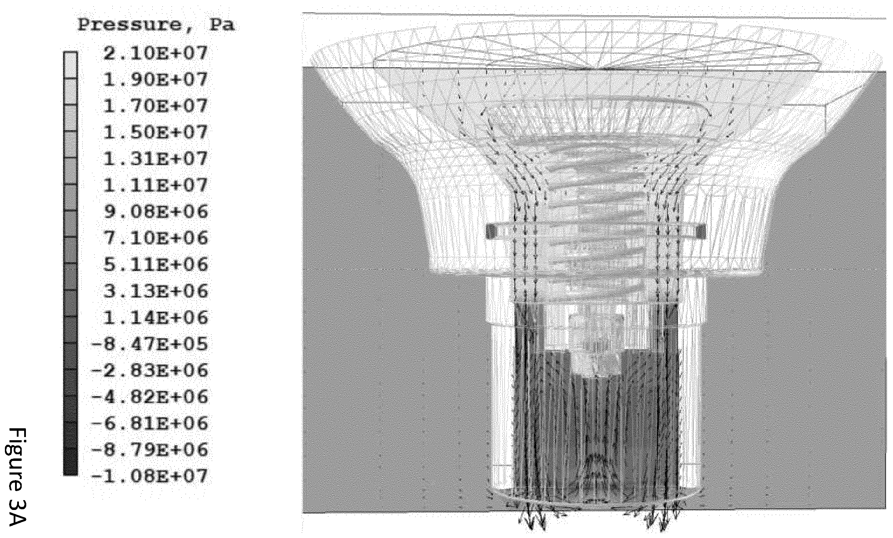

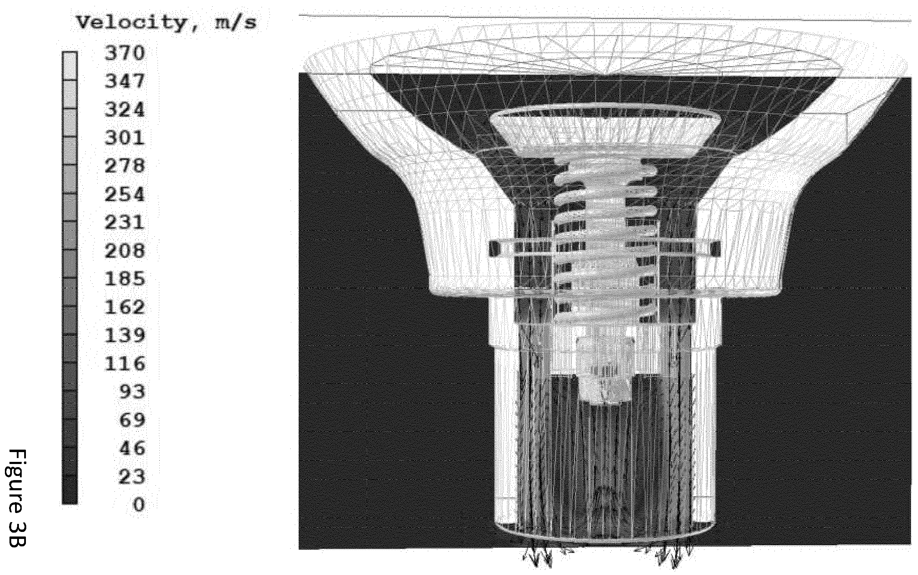

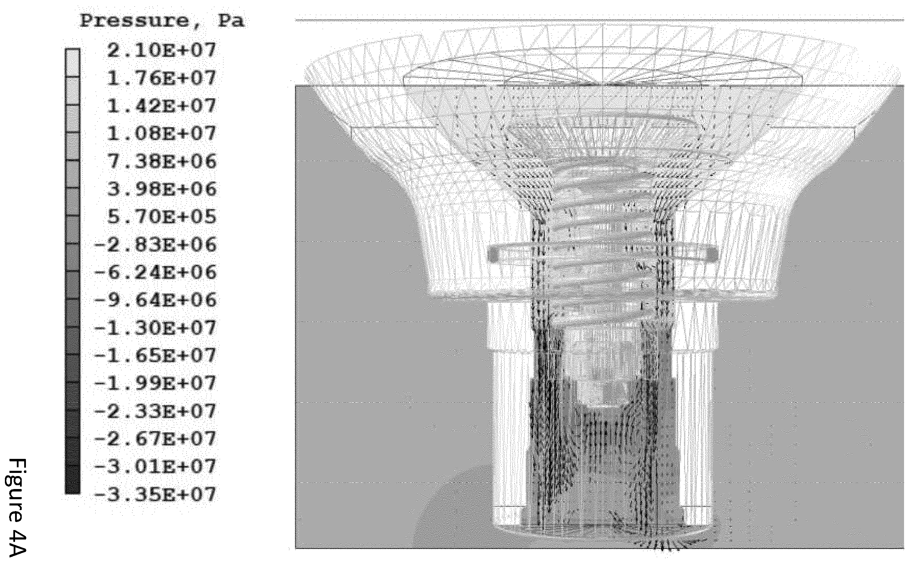

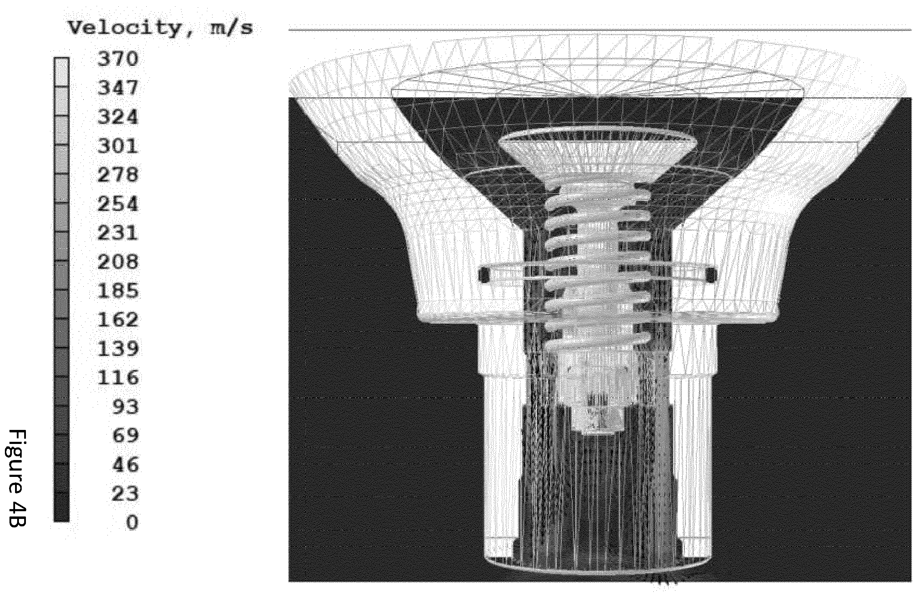

FIGS. 3A and 3B and FIGS. 4A and 4B show the results of fluid analysis (CFD analysis) performed for an example having the same configuration as the above-described embodiment and a comparative example having a configuration obtained by removing the cover 9 from the configuration of the example. In the fluid analysis, a working oil having a kinematic viscosity of 46 mm²/s (= 46 cSt) was used. FIG. 3A shows changes in the pressure of the working fluid in the hole 10 in the example, and FIG. 4A shows changes in the pressure of the working fluid in the hole 10 in the comparative example. FIG. 3B shows changes in the flow velocity of the working fluid in the hole 10 in the example, and FIG. 4B shows changes in the flow velocity of the working fluid in the hole 10 in the comparative example.

In the case of the example in which the cover 9 is provided, the working fluid is discharged at approximately uniform velocity over the entire anterior chamber 11, and approximately no pressure loss is produced in the anterior chamber 11 of the hole 10, so that pressure balance is approximately established in the vicinity of the closing means 7. In the case of the comparative example, the working fluid swirls in the vicinity of the elastic member 8, and the working fluid pressure drops to about 70% to about 50% as approaching the intermediate wall 13. This shows that a pressure loss is produced, and pressure unbalance occurs in the vicinity of the closing means 7. Notably, although detailed analysis results will not be described, similar results were obtained in the case where water was used as the working fluid.

In the accumulator 1, the working fluid is supplied from the hydraulic circuit to the hydraulic pressure chamber 5 and is discharged from the hydraulic pressure chamber 5 to the hydraulic circuit as a result of contraction and expansion of the gas pressure chamber 4 (the bladder 3) in accordance with the working fluid pressure of the hydraulic circuit, whereby the above-described function is realized. At that time, the higher the flow rate at which the working fluid can be discharged from the hydraulic pressure chamber 5 to the hydraulic circuit, the higher the response of the accumulator 1 to a change in the working fluid pressure of the hydraulic circuit. Since the pressure loss within the accumulator is reduced, an increase in the flow rate is expected.

Although specific numerical values will not be provided, in the case of the example, as compared with the comparative example, the discharge flow rate of the working fluid increased about 75% when the working fluid was water, about 72% when the working fluid was a working oil having a kinematic viscosity of 32 mm²/s, and about 71% when the working fluid was a working oil having a kinematic viscosity of 46 mm²/s.

Accordingly, in the accumulator 1 of the present embodiment, through provision of the cover 9, the pressure loss produced when the working fluid is discharged from the accumulator 1 to the hydraulic circuit can be reduced, and the pressure in the vicinity of the closing means 7 can be maintained in an approximately balanced state. Therefore, it is possible to prevent occurrence of the confinement phenomenon, which would otherwise occur due to the pressure loss.

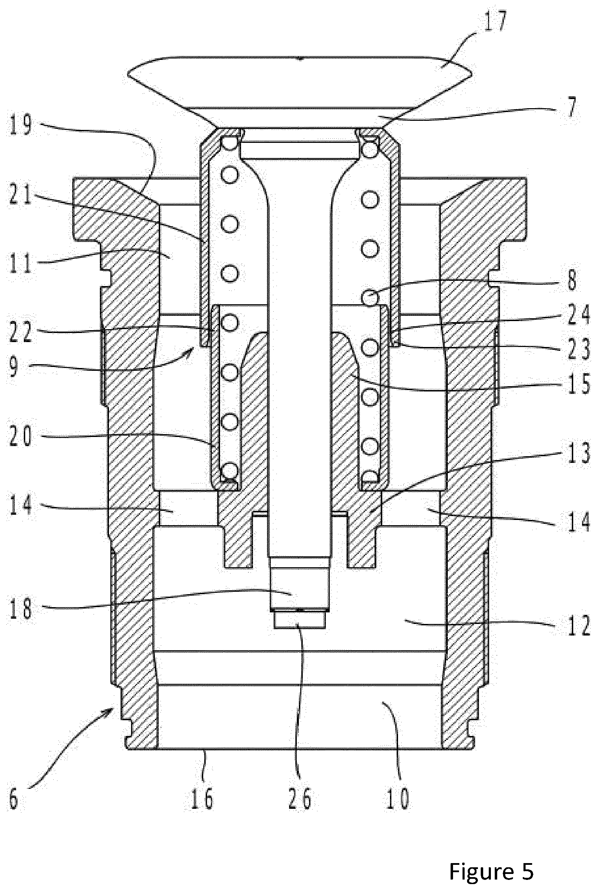

A second embodiment of the present invention will be described with reference to FIG. 5. The present embodiment differs from the first embodiment in the point that the cover 9 is composed of a plurality of cover elements 20 and 21. Since the constituent elements denoted by the same reference numerals as the constituent elements of the first embodiment are identical with the constituent elements of the first embodiment, their description will be omitted.

In the present embodiment, the cover 9 is composed of at least two cover elements 20 and 21 and is disposed to cover approximately the entirety of the elastic member 8. Of the at least two cover elements 20 and 21, one cover element 20 is attached to the intermediate wall 13 of the hole 10 so as to cover a portion of the elastic member 8 on the side opposite the hydraulic pressure chamber 5, as in the case of the first embodiment. The other cover element 21 is attached to the valve body 17 of the closing means 7 so as to cover a portion of the elastic member 8 on the side toward the hydraulic pressure chamber 5. Their distal end portions 22 and 23 overlap each other.

Notably, in the present embodiment, the distal end portion 22 of the cover element 20 and the distal end portion 23 of the cover element 21 are overlapped such that the distal end portion 22 is located on the radially inner side of the distal end portion 23. However, the distal end portion 22 of the cover element 20 and the distal end portion 23 of the cover element 21 may be overlapped such that the distal end portion 22 is located on the radially outer side of the distal end portion 23. Also, the distal end portion 22 of the cover element 20 may have a taper on its surface facing the distal end portion 23 of the cover element 21. Similarly, the distal end portion 23 of the cover element 21 may have a taper on its surface facing the distal end portion 22 of the cover element 20.

A discharge passage 24 for discharging the working fluid within the cover 9 to the hole 10 is provided between the distal end portion 22 of the cover element 20 and the distal end portion 23 of the cover element 21. The discharge passage 24 is provided so as to prevent occurrence of a situation in which, when the closing means 7 closes the hole 10, the space inside the cover 9 is filled with the working fluid and the closing means 7 becomes unable to move in the closing direction. The width, shape, etc. of the discharge passage 24 can be appropriately selected as necessary so long as the discharge of the working fluid within the cover 9 is not hindered.

In the present embodiment, since the cover 9 (the cover elements 20 and 21) covers almost the entirety of the elastic member 8, the pressure loss produced when the working fluid is discharged from the accumulator 1 to the hydraulic circuit can be reduced further.

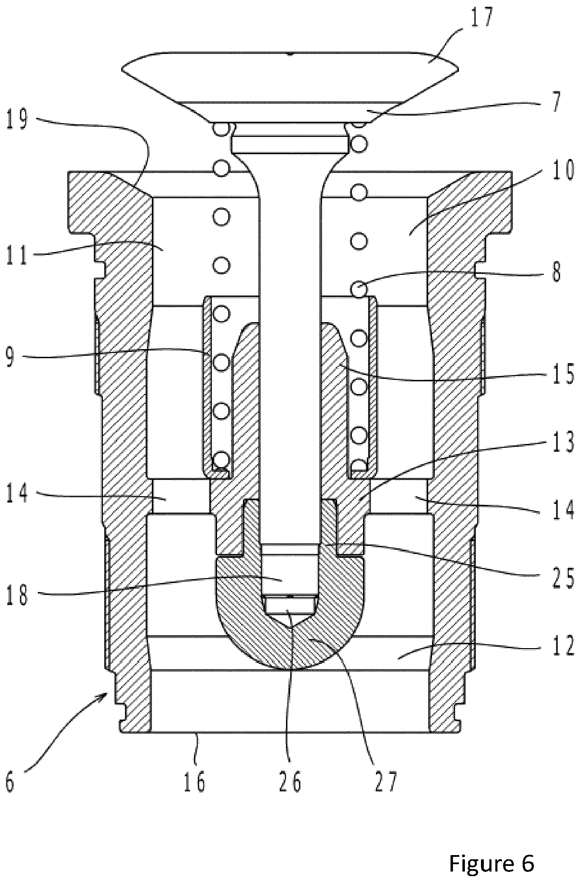

A third embodiment of the present invention will be described with reference to FIG. 6. The present embodiment differs from the first embodiment in the point that a pressure loss reducer 25 is provided in the posterior chamber 12 of the hole 10. Since the constituent elements denoted by the same reference numerals as the constituent elements of the first embodiment are identical with the constituent elements of the first embodiment, their description will be omitted.

When the working fluid is discharged from the accumulator 1 to the hydraulic circuit, the working fluid flows from the anterior chamber 11 of the hole to the posterior chamber 12 through the communication holes 14. Since the cross-sectional area of the communication holes 14 is smaller than the cross-sectional area of the posterior chamber 12, the area of the flow passage increases sharply when the working fluid flows from the communication holes 14 into the posterior chamber 12. Although the influence of this is smaller than the influence of the elastic member 8, due to the sharp increase in the flow passage area, the working fluid swirls and some pressure loss is produced.

In the present embodiment, the accumulator 1 has the pressure loss reducer 25 provided in a central region of the posterior chamber 12 of the hole 10. The pressure loss reducer 25 is provided so as to reduce the difference in flow passage area between the communication holes 14 and the posterior chamber 12. The pressure loss reducer 25 is provided such that the pressure loss reducer 25 extends from the intermediate wall 13 toward the open end 16 when the hole 10 is opened. Specifically, at least a portion of the posterior chamber 12 on the intermediate wall 13 side has an approximately annular cross section so that the width of that portion in the radial direction decreases. This configuration reduces the difference in flow passage area between the flow passages before the posterior chamber 12 side openings of the communication holes 14 and the flow passage after the posterior chamber 12 side openings of the communication holes 14.

In the present embodiment, the pressure loss reducer 25 is provided on a base end portion 26 of the shaft 18 of the closing means 7, which portion is located on the side opposite the valve body 17. An end portion 27 of the pressure loss reducer 25 on the side toward the open end 16 has an approximately hemispherical shape.

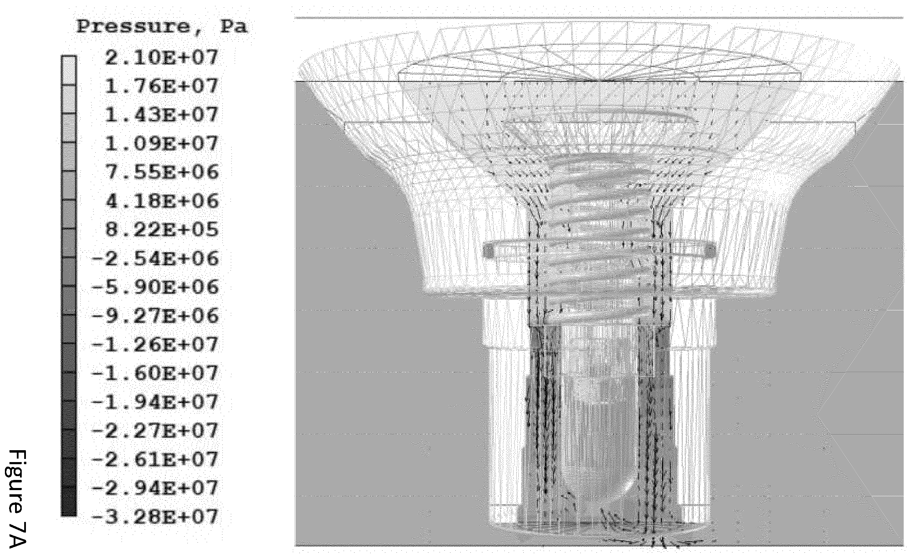

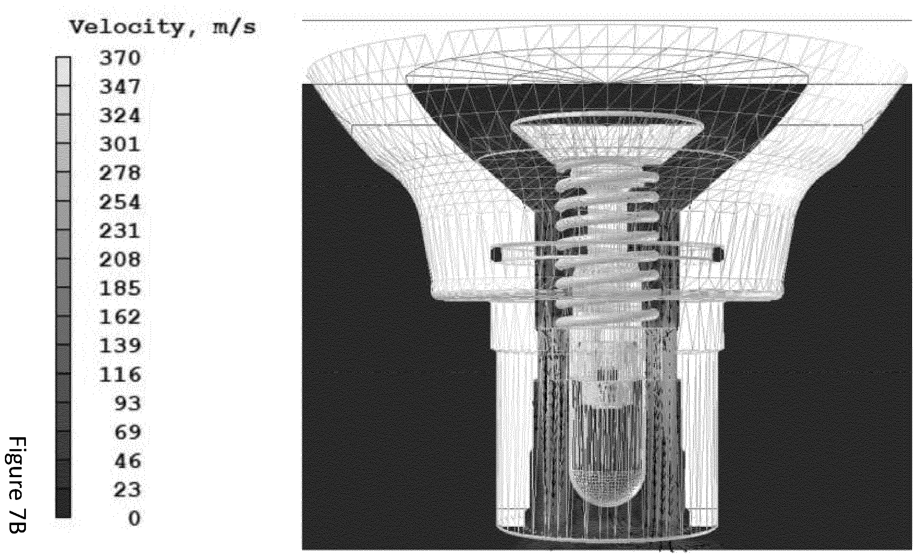

FIGS. 7A and 7B show the results of fluid analysis (CFD analysis) performed for a reference example. In the fluid analysis, a working oil having a kinematic viscosity of 46 mm²/s (= 46 cSt) was used. Notably, in the reference example, since the posterior chamber 12 has an increased length for proper performance of CFD analysis, the pressure loss reducer 25 also has an increased length. Further, the cover 9 is not provided because the influence of presence/absence of the pressure loss reducer 25 is analyzed in a state in which the influence of the cover 9 is eliminated. FIG. 7A shows changes in the pressure of the working fluid in the hole 10. FIG. 7B shows changes in the flow velocity of the working fluid in the hole 10.

The comparison between the reference example and the comparative example revealed the following. In the case of the reference example having the pressure loss reducer 25, although a decrease in the working fluid pressure as a result of passage of the fluid through the communication holes 14 is observed, the working fluid is discharged without swirling within the posterior chamber 12, whereby the pressure loss is reduced, and the pressure in the vicinity of the closing means 7 is approximately balanced. In contrast, in the case of the comparative example, the working fluid swirls within the posterior chamber 12, and the working fluid pressure decreases in particular in a large region around the base end portion 26. This means that a pressure loss is produced. In the case of the comparative example, due to the influence of the pressure loss, pressure unbalance occurs in the vicinity of the closing means 7. Notably, although detailed analysis results will not be described, similar results were obtained in the case where water was used as the working fluid.

Accordingly, through provision of the pressure loss reducer 25, the pressure loss produced when the working fluid is discharged from the accumulator 1 to the hydraulic circuit can be reduced further, and the pressure in the vicinity of the closing means 7 can be maintained in an approximately balanced state more reliably. Therefore, it is possible to prevent occurrence of the confinement phenomenon more reliably, which phenomenon would otherwise occur due to the pressure loss.

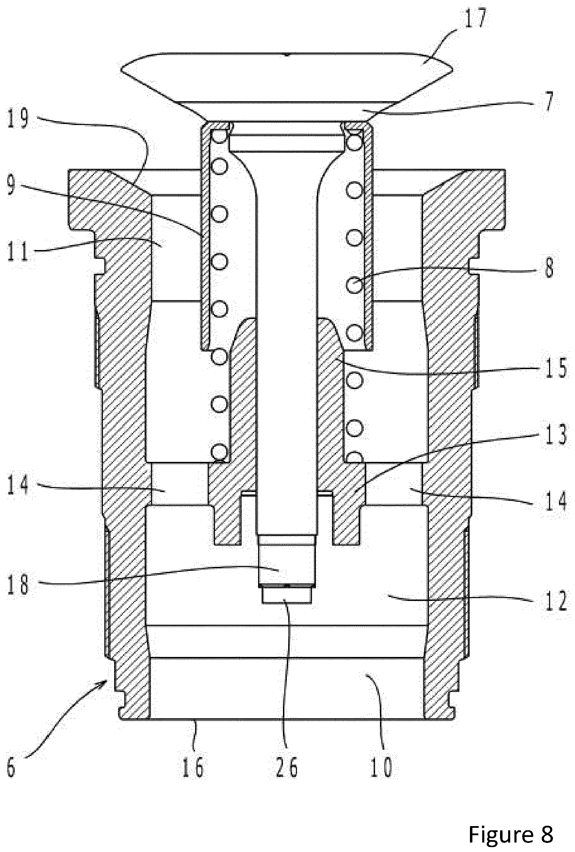

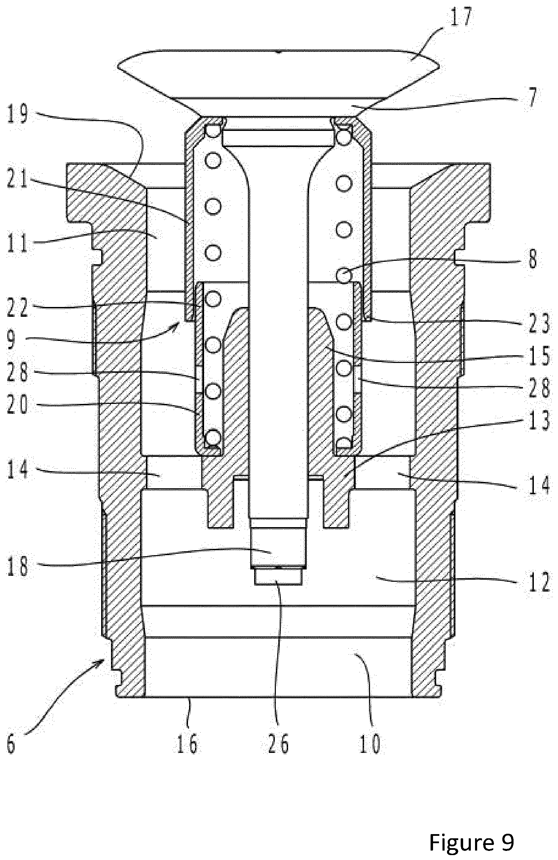

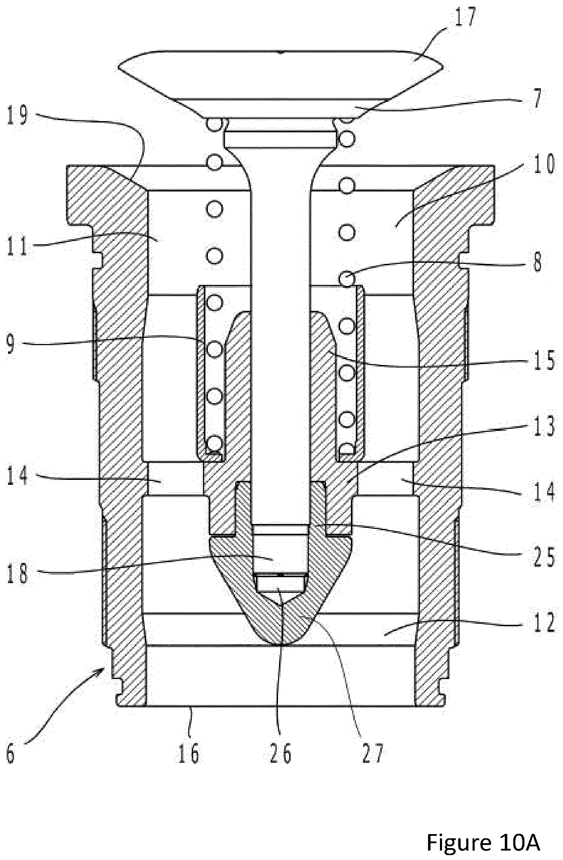

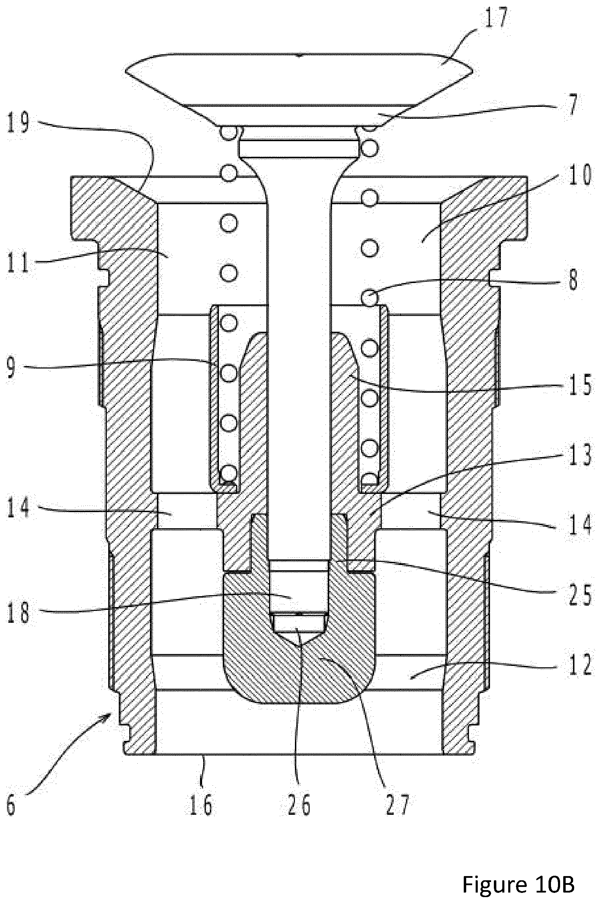

While the present invention has been described on the basis of the above-described embodiments, the present invention is not limited to the above-described embodiments and can be modified freely without departing from the scope of the invention.
(1) In the above-described first and third embodiments, the cover 9 may be provided to cover a portion of the elastic member 8 on the side toward the hydraulic pressure chamber 5, preferably, at least an approximately upper half of the elastic member 8 (see FIG. 8).
(2) In the above-described second embodiment, in place of or in addition to the discharge passage 24, a single or a plurality of hole-like discharge passages 28 may be provided as the discharge passage. The hole-like discharge passages 28 are provided in at least one of the cover elements 20 and 21 and establish communication between the interior of the cover 9 and the hole 10 (see FIG. 9).
(3) In the above-described third embodiment, the shape of the end portion 27 may be selected appropriately, as necessary, from various shapes such as an approximately conical shape (see FIG. 10A) and an approximately cylindrical columnar shape (see FIG. 10B).
(4) The configurations of the above-described embodiments may be combined. For example, a pressure loss reducer similar to the pressure loss reducer 25 of the third embodiment may be provided in the second embodiment.

## Claims

1. An accumulator (1) comprising:
a body (2); and
a bladder (3),
the bladder (3) dividing a space inside the body (2) into a hydraulic pressure chamber (5) and a gas pressure chamber (4),
the body (2) including a hydraulic side connection portion (6) having a hole for supply and discharge (10), a closing means (7) for opening and closing the hole for supply and discharge (10), and an elastic member (8) for urging the closing means (7) in a closing direction,
the elastic member (8) being disposed in the hole for supply and discharge (10),
the accumulator (1) being **characterized in that** a cover (9) is provided to cover at least a portion of the elastic member (8).

2. An accumulator (1) according to claim 1, wherein the cover (9) is provided to cover at least a portion of the elastic member (8) on a side toward the hydraulic pressure chamber (5) or at least a portion of the elastic member (8) on a side opposite the hydraulic pressure chamber (5) side.

3. An accumulator (1) according to claim 1, wherein
the cover (9) is composed of at least two cover elements (20, 21);
one of the cover elements (21) is provided to cover at least a portion of the elastic member (8) on a side toward the hydraulic pressure chamber (5); and
the other cover element (20) is provided to cover at least a portion of the elastic member (8) on a side opposite the hydraulic pressure chamber (5) side.

4. An accumulator (1) according to claim 3, wherein
the at least two cover elements (20, 21) are disposed such that their distal end portions (22, 23) overlap each other and they cover approximately the entirety of the elastic member (8); and
at least one discharge passage (24) is formed so as to discharge a working fluid within the cover (9).

5. An accumulator (1) according to claim 4, wherein the discharge passage (24) is provided between the distal end portions (22, 23) of the at least two cover elements (20, 21).

6. An accumulator (1) according to claim 4, wherein the discharge passage (24) is a hole provided in at least one of the at least two cover elements (20, 21).

7. An accumulator (1) according to any one of claims 1 to 6, wherein
the hole for supply and discharge (10) has an anterior chamber (11) communicatable with the hydraulic pressure chamber (5), a posterior chamber (12) provided on a side opposite the anterior chamber (11), an intermediate wall (13) serving as a partition between the anterior chamber (11) and the posterior chamber (12), and a communication hole (14) formed in the intermediate wall (13) and establishing communication between the anterior chamber (11) and the posterior chamber (12);
the posterior chamber (12) has an open end on a side opposite the intermediate wall (13), and a pressure loss reducer (25) is provided in a central region of the posterior chamber (12); and
the pressure loss reducer (25) is provided to extend from the intermediate wall (13) toward the open end when the hole for supply and discharge (10) is opened.

8. An accumulator (1) according to any one of claims 1 to 7, wherein the closing means (7) is a poppet valve, and the elastic member (8) is a compression coil spring.
